(19) Europäisches Patentamt
European Patent Office
Office européen des brevets

(11) **EP 3 850 315 B1**

(12) **FASCICULE DE BREVET EUROPEEN**

(45) Date de publication et mention
de la délivrance du brevet:
**26.10.2022 Bulletin 2022/43**

(21) Numéro de dépôt: **19759620.8**

(22) Date de dépôt: **03.09.2019**

(51) Classification Internationale des Brevets (IPC):
***G01F 1/84*** (2006.01)

(52) Classification Coopérative des Brevets (CPC):
**G01F 1/8422; G01F 1/8427; G01F 1/8463**

(86) Numéro de dépôt international:
**PCT/EP2019/073458**

(87) Numéro de publication internationale:
**WO 2020/053033 (19.03.2020 Gazette 2020/12)**

(54) **DISPOSITIF DE MESURE DE DÉBIT MASSIQUE**

MASSENDURCHFLUSSMESSGERÄT

MASS FLOW MEASURING DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.09.2018 FR 1871032**

(43) Date de publication de la demande:
**21.07.2021 Bulletin 2021/29**

(73) Titulaires:
• **Commissariat à l'Énergie Atomique
et aux Énergies Alternatives
75015 Paris (FR)**
• **SAFRAN
75015 Paris (FR)**

(72) Inventeurs:
• **PALACIOS LALOY, Agustin
38054 Grenoble cedex 09 (FR)**
• **RIOU, Jean-Christophe
92100 Boulogne Billancourt (FR)**

(74) Mandataire: **INNOV-GROUP
310, avenue Berthelot
69372 Lyon Cedex 08 (FR)**

(56) Documents cités:
WO-A1-2004/011894     WO-A1-2006/071454
WO-A2-2007/047524     DE-A1- 4 327 052
JP-A- H0 650 784      JP-A- H0 688 740
JP-A- 2003 177 048    US-A- 5 373 745
US-A1- 2006 000 293

EP 3 850 315 B1

**Description**

L'invention concerne les capteurs de débit massique, et en particulier les capteurs de débit massique basés sur l'effet de Coriolis.

La mesure de débit massique dans une conduite peut s'avérer primordiale pour le fonctionnement de certains systèmes, tels que des moteurs de véhicule. En effet, le fonctionnement de moteurs de véhicule nécessite de connaître très précisément et en temps réel la quantité de carburant introduite dans une chambre de combustion, afin d'en contrôler le fonctionnement de façon optimale. En particulier, la détermination du débit massique de carburant permet de déterminer en temps réel le rendement énergétique du moteur, en comparant le débit massique de carburant à la puissance développée en sortie, et mesurée par d'autres capteurs. Notamment en raison des fortes variations de températures que peut connaître le carburant et du fait de son coefficient de dilatation thermique, le débit volumique de carburant n'est pas un paramètre fiable de contrôle pour le fonctionnement d'un moteur. La température du carburant peut en effet fortement varier, par exemple du fait que la variation de température dans la chambre de combustion peut se propager dans tous les composants du moteur environnant, y compris une conduite de carburant. Les mesures de débit volumique peuvent alors donner une image fausse de la quantité réelle de carburant consommée.

Afin de favoriser un niveau de précision important et une moindre sensibilité aux accélérations que d'autres technologies, des capteurs de débit massique à effet de Coriolis ont été développés. De tels capteurs sont basés sur l'accélération de Coriolis apparaissant lorsqu'on observe depuis l'extérieur un mouvement à vitesse constante par référence à un repère en rotation.

Le document EP2888562 décrit un capteur de débit massique, déterminant un débit massique dans une conduite en mesurant les mouvements de vibrations de la conduite traversée par un fluide. Les modes vibratoires de la conduite sont influencés par des caractéristiques combinées de masse, de rigidité et d'amortissement structurel de celle-ci. Ce capteur de débit massique inclut des actionneurs configurés pour solliciter la conduite selon des modes vibratoires de celle-ci, durant un écoulement de fluide. Les actionneurs sont disposés en des emplacements distants le long de la conduite. Le capteur de débit massique inclut également des transducteurs électromécaniques mesurant une réponse vibratoire de la conduite en des emplacements respectifs distants le long de cette conduite.

Un débit massique dans la conduite est déterminé en mesurant un décalage temporel ou un décalage de phase des mouvements mesurés au niveau des transducteurs distants. Ces décalages temporels ou de phases sont induits par des forces de Coriolis sur le fluide s'écoulant. Les forces de Coriolis sont générées par un changement de direction du fluide s'écoulant, du fait des vibrations de la conduite. Ces forces de Coriolis sont appliquées sur la conduite formant le capteur et induisent des perturbations du mouvement vibratoire. Le mouvement de la conduite peut alors se retrouver en avance de phase au niveau d'un transducteur, et en retard de phase au niveau d'un autre transducteur. En déterminant le décalage de phase entre ces transducteurs, un calculateur déduit une valeur de débit massique. Un tel calculateur peut par exemple déduire un décalage temporel à partir de la mesure de décalage de phase, en utilisant la fréquence de l'excitation vibratoire. Le débit massique s'écoulant à travers la conduite est directement proportionnel à ce décalage temporel.

La conduite formant le capteur est maintenue entre deux portées. La conduite est recourbée en quatre emplacements entre ces portées. Un actionneur sollicite la conduite dans sa partie médiane. Les transducteurs sont positionnés de part et d'autre de cet actionneur.

Un tel capteur de débit massique présente un niveau de précision insuffisant dans des environnements présentant des fortes vibrations, tels que des moteurs thermiques, des bateaux ou des aéronefs. Un tel capteur peut notamment s'avérer assez sensible à des perturbations dans un domaine de fréquences allant jusqu'à plusieurs centaines de Hertz, dans laquelle se situe la fréquence de résonnance de la conduite. Le problème est que les perturbations dans ce domaine de fréquence sont relativement importantes dans certaines applications, telles que l'automobile ou l'aéronautique.

Par ailleurs, un capteur de débit massique de type Coriolis peut être réalisé en version miniaturisée. Cette réduction d'échelle permet d'opérer à des fréquences d'excitation nettement plus élevées à celles utilisés dans des capteurs de taille plus grande. Le fonctionnement à ces fréquences plus élevées permet de ne plus être sensible aux erreurs de mesure provenant des vibrations de l'environnement. Par contre un tel capteur de débit massique est incompatible avec les débits élevés que requiert un moteur thermique destiné à la propulsion d'un véhicule, d'un aéronef ou d'un bateau, car la miniaturisation entraine une réduction d'échelle des conduites qui ne permet pas un transit efficace de débits importants. En outre, un tel capteur présente un risque d'obturation de la conduite ou une perturbation de son fonctionnement en présence d'impuretés dans celle-ci. L'absence d'impuretés peut difficilement être garantie dans certains écoulements de fluide.

Le document WO2004011894 décrit un dispositif avec une conduite dont la géométrie est conçue pour améliorer sa sensibilité à la pression. La conduite est entrainée en résonance selon deux modes le long de deux axes transversaux distincts. La mesure des rapports de fréquence, mis au carré, permet d'obtenir une relation sensiblement linéaire à la pression, assez indépendante d'autres propriétés du matériau ou d'autres facteurs environnementaux.

Il existe notamment un besoin pour un capteur de débit massique présentant un très bon niveau de précision, peu sensible aux vibrations, peu sensible aux chocs, et permettant un débit de carburant suffisamment élevé.

L'invention vise à résoudre un ou plusieurs de ces inconvénients. L'invention porte ainsi sur un dispositif de mesure de débit massique, tel que défini dans la revendication 1 annexée.

L'invention porte également sur les variantes des revendications dépendantes.

L'invention concerne également un procédé de mesure de débit massique, tel que défini dans la revendication 17 annexée.

La description est faite ci-après, à titre indicatif et nullement limitatif, en référence aux dessins annexés, dans lesquels :

[Fig.1] est une représentation schématique en section d'un dispositif de mesure de débit massique selon un exemple d'un mode de réalisation de l'invention ;

[Fig.2] et

[Fig.3] illustrent le dispositif de mesure de débit massique dans deux positions de ses actionneurs ;

[Fig.4] illustre un exemple d'un autre mode de réalisation de l'invention au repos.

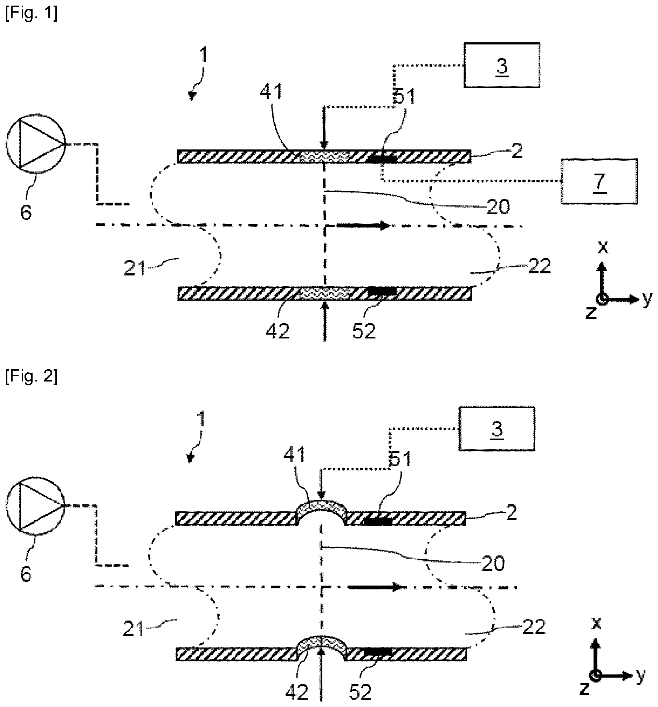

La figure 1 est une vue en section d'un exemple de mode de réalisation d'un dispositif de mesure de débit massique 1 selon l'invention. Le dispositif 1 inclut une conduite d'écoulement 2. La conduite 2 définit une trajectoire d'écoulement de fluide, illustrée ici par la ligne en tiret-point. La trajectoire d'écoulement de fluide de la conduite 2 pourra par exemple être définie par une ligne médiane de la conduite 2. La figure 1 illustre la conduite 2 en coupe selon un plan incluant cette trajectoire d'écoulement de fluide. La conduite 2 peut typiquement présenter une section transversale circulaire. La conduite 2 peut être connectée à un dispositif d'entraînement de fluide, par exemple la pompe 6 illustrée, de façon connue en soi.

Le dispositif 1 inclut un groupe d'actionneurs. Le groupe d'actionneurs inclut ici des actionneurs 41 et 42. Les actionneurs 41 et 42 sont disposés dans un même plan transversal définissant une section transversale de la conduite 2. Le plan transversal est ainsi perpendiculaire à la trajectoire d'écoulement de fluide. Les actionneurs 41 et 42 sont ici disposés à l'opposé l'un de l'autre par rapport à la trajectoire d'écoulement de fluide.

Les actionneurs 41 et 42 sont commandés pour se déplacer sélectivement dans le plan transversal. Les actionneurs 41 et 42 sont notamment configurés pour modifier la forme de la section transversale de la conduite 2 dans le plan transversal. Les actionneurs 41 et 42 sont ici configurés pour se déplacer sélectivement en saillie ou en retrait par rapport à la conduite 2 (dit autrement, vers l'intérieur ou l'extérieur de la conduite selon une direction radiale, soit une direction perpendiculaire à l'axe X). Au niveau des actionneurs 41 et 42, on pourra considérer que la section transversale de la conduite est définie par une surface reliant un contour de la conduite 2 en aval des actionneurs 41 et 42 à un contour de la conduite 2 en amont des actionneurs 41 et 42. Le déplacement des actionneurs 41 et 42 est commandé par un circuit de commande 3. Les actionneurs 41 et 42 pourront par exemple comprendre des membranes étanches respectives et des éléments piézoélectriques respectifs sollicitant ces membranes étanches.

Le dispositif 1 comprend en outre des capteurs 51 et 52, configurés pour mesurer un effort ou une contrainte selon une direction perpendiculaire à la trajectoire d'écoulement, soit une direction radiale. Les capteurs 51 et 52 sont avantageusement en même nombre que les actionneurs 41 et 42. Le nombre d'actionneurs (41 et 42 dans l'exemple) du groupe d'actionneurs est indépendant du nombre de capteurs (51 et 52 dans l'exemple) et peut donc être différent. Les capteurs 51 et 52 sont disposés à proximité des actionneurs 41 et 42 respectivement. Le décalage angulaire des capteurs 51 et 52 autour de la trajectoire d'écoulement par rapport à leurs actionneurs respectifs 41 et 42 est avantageusement au plus de 15° lorsqu'ils sont placés dans un même plan. Le décalage des capteurs 51 et 52 par rapport aux actionneurs 41 et 42 respectivement est avantageusement au plus égal à la distance entre les actionneurs 41 et 42, de préférence au plus égal au rayon de la conduite 2. Les capteurs 51 et 52 sont positionnés dans un même plan perpendiculaire à la trajectoire d'écoulement dans la conduite 2. Les capteurs 51 et 52 peuvent être positionnés à l'opposée l'un de l'autre par rapport à la trajectoire d'écoulement. Les capteurs 51 et 52 peuvent par exemple être du type capteur piézoélectrique, ou bien piézorésistif, ou bien encore capacitif. Ainsi il existe des versions nanométriques (dites de type NEMS) pour les capteurs piézorésistifs. Dans tous les cas les capteurs pourraient être réalisés sous la forme de membranes destinées à être en contact avec le fluide et couplant les forces provenant de celui-ci à la structure de mesure (piézorésistive, piézoélectrique ou capacitive). Dans le cas d'une mesure capacitive qui fournit une variation de position d'un élément mécanique, le couplage de celui-ci à une membrane dont les propriétés mécaniques sont connues permet d'obtenir la contrainte qui a été nécessaire à provoquer la variation de position mesurée.

Les capteurs 51 et 52 ne sont avantageusement pas fixés sur les actionneurs 41 et 42, afin de ne pas fausser leur mesure. On pourrait également envisager de fixer un ou plusieurs capteurs 51 (respectivement 52) sur la membrane de l'actionneur 41 (respectivement 42).

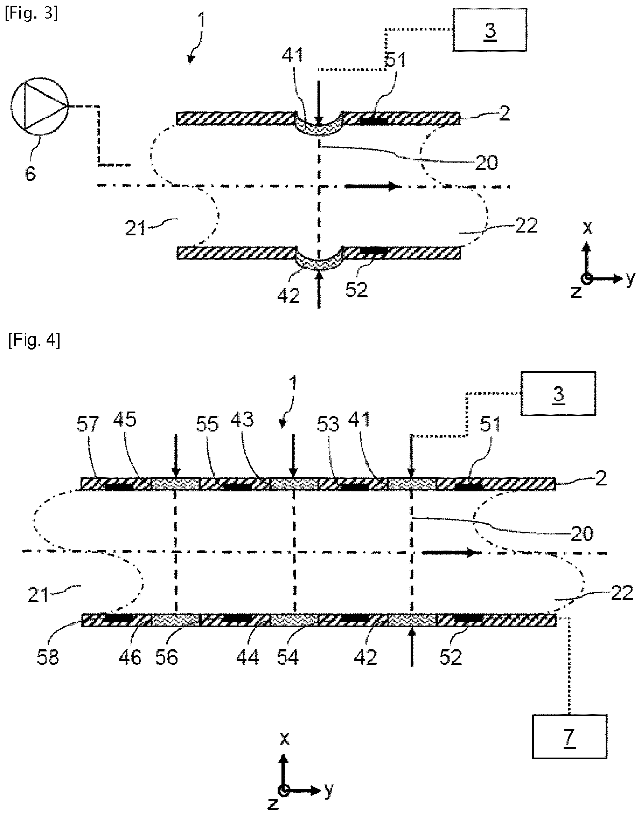

Le circuit de commande 3 est configuré pour commander le déplacement des actionneurs 41 et 42, de sorte que l'aire de la section d'écoulement 20 à travers la conduite 2 et dans le plan transversal incluant ces actionneurs 41 et 42 (plan incluant ici les directions Y et Z) reste constante. On peut aussi envisager que le volume soit conservé par le déplacement des actionneurs commandés, dans un tronçon d'écoulement transversal incluant ces actionneurs. Cela ressort plus explicitement en relation avec un descriptif de déplacement des actionneurs 41 et 42 illustré aux figures 2 et 3. Le circuit de commande 3 peut par exemple commander les actionneurs 41 et 42 avec des consignes d'accélération ou des consignes de quantité de déplacement dans le plan transversal. Des consignes d'accélération ont notamment pour avantage de rendre l'excitation du fluide pas ou peu dépendante de sa densité. On a ici illustré deux actionneurs 41 et 42 dans un souci de simplicité. Le groupe d'actionneurs peut également inclure plus de deux actionneurs positionnés dans un même plan transversal, commandés pour conserver l'aire de la section d'écoulement dans le plan transversal incluant les actionneurs 41 et 42. Le groupe d'actionneurs est également configuré pour modifier la forme de la section transversale de la conduite 2 dans le plan transversal.

Le circuit de commande 3 est configuré pour commander des déplacements des actionneurs 41 et 42 à une fréquence supérieure à la plage de vibration principale du système sur lequel il doit être monté. En particulier, pour certaines applications comme les motorisations d'avion, il est avantageux d'actionner les actionneurs à une fréquence au moins égale à 20 KHz, de préférence au moins égale à 50KHz. L'effet de l'excitation des actionneurs 41 et 42 sur les forces de Coriolis n'est ainsi quasiment pas parasité par les vibrations du système.

Un tel déplacement des actionneurs 41 et 42 permet d'appliquer une accélération du fluide normale à sa direction d'écoulement, caractéristique d'une rotation. Les équations de mouvement du fluide vu d'un référentiel au repos extérieur à la conduite 2 incluent ainsi un terme d'accélération de Coriolis. Par réaction du fluide, la force associée à ce terme de Coriolis induit une force sur la conduite. Les actionneurs 41 et 42 sont ainsi destinés à appliquer un effort non pas sur la conduite 2 complète mais seulement sur le fluide traversant cette conduite 2. Un des avantages de cette technique est que la mesure de débit massique est beaucoup plus indépendante du module d'élasticité de la conduite 2, qui peut évoluer avec le vieillissement de cette conduite 2. Les vibrations d'un système peuvent notamment induire une altération du module d'élasticité de la conduite 2. Par ailleurs, en excitant le fluide plutôt que la conduite 2, on améliore la durée de vie du système et on limite la complexité du cahier des charges pour la conception de la conduite 2.

Dans la configuration illustrée à la figure 2, l'actionneur 41 se déplace pour former un retrait par rapport à l'intérieur de la conduite 2, et l'actionneur 42 se déplace pour former une saillie à l'intérieur de la conduite 2. Le volume déplacé par le retrait de l'actionneur 41 et le volume déplacé par la saillie simultanée de l'actionneur 42 sont identiques, de sorte qu'au niveau des actionneurs 41 et 42, l'aire de la section d'écoulement de la conduite 2 reste constante. En particulier, dans le plan transversal incluant les actionneurs 41 et 42 (plan comprenant par exemple la flèche de déplacement des actionneurs 41 et 42), l'aire de la section d'écoulement 20 de la conduite 2 reste constante.

De façon similaire, dans la configuration illustrée à la figure 3, l'actionneur 42 se déplace pour former un retrait par rapport à l'intérieur de la conduite 2, et l'actionneur 41 se déplace pour former une saillie à l'intérieur de la conduite 2. Le volume du retrait de l'actionneur 42 et le volume de la saillie simultanée de l'actionneur 41 sont identiques, de sorte qu'au niveau des actionneurs 41 et 42, l'aire de la section d'écoulement de la conduite 2 reste encore constante. Dans le plan transversal incluant les actionneurs 41 et 42, l'aire de la section d'écoulement 20 de la conduite 2 reste ici aussi constante.

Avantageusement, les saillies et retrait des actionneurs 41 et 42 respecteront l'inégalité suivante : Ac/Aa >10, avec Ac l'aire de la section d'écoulement dans la conduite 2 au niveau des actionneurs 41 et 42, Aa l'aire du retrait et de la saillie des actionneurs 41 et 42 dans la section d'écoulement de la conduite 2. Un tel rapport permet notamment de limiter l'amplitude des efforts de réaction exercés par le fluide sur la conduite 2 lors des déplacements des actionneurs 41 et 42.

Pour des actionneurs 41 et 42 incluant des membranes pour déplacer le fluide, ces membranes sont par exemple choisies dans des matériaux présentant une plasticité la plus faible possible, afin d'être robuste au vieillissement par des phénomènes tels que l'écrouissage. De telles membranes peuvent par exemple être réalisées en Silicium, en SiC, en silice sous forme amorphe ou cristallisée, en nitrure de Silicium, en diamant ou en céramique frittée.

Avantageusement, la conduite 2 comporte un orifice d'entrée 21 et un orifice de sortie 22 de part et d'autre des actionneurs 41 et 42. Entre ces orifices 21 et 22, la conduite 2 s'étend avantageusement selon un axe rectiligne. Ceci s'avère particulièrement avantageux lorsque la conduite 2 présente une section très réduite, ce qui limite le risque de bouchage ou de perturbation par des impuretés au niveau des actionneurs 41 et 42. Ceci s'avère particulièrement avantageux lorsque l'aire de la section d'écoulement 20 est inférieure à 5 mm$^2$, et en particulier lorsque cette aire est inférieure à 2mm$^2$. Avantageusement, la section transversale de la conduite 2 entre les orifices 21 et 22 présente une section transversale constante. L'invention s'applique aussi avantageusement à une conduite 2 présentant une section d'écoulement 20 au moins égale à 5mm$^2$, de préférence au moins égale à 10mm$^2$. L'invention s'applique avantageuse-sement à une conduite 2 présentant une fréquence de résonance fondamentale supérieure à 1KHz.

Le dispositif de mesure 1 inclut également un dispositif de calcul 7, configuré pour calculer le débit massique traversant la conduite 2 en fonction d'une différence entre les mesures des capteurs 51 et 52. Le dispositif de calcul 7 peut être sous forme de dispositif de calcul numérique courant, susceptible d'exécuter un programme informatique de calcul du débit massique en fonction des mesures des capteurs 51 et 52.

Les calculs de débit massique par le dispositif de calcul 7 seront par exemple basés sur les explications suivantes. Lorsqu'on applique un déplacement vertical v (comme illustré par le mouvement imposé par les actionneurs 41 et 42 aux figures 2 et 3) à un fluide s'écoulant à travers la conduite 2 avec une vitesse horizontale U (au repos, U=0), il en résulte une vitesse verticale dv/dt du fluide s'exprimant par la relation qui suit :

[Math. 2]

$$\frac{dv}{dt} = \frac{\partial v}{\partial x} U + \frac{\partial v}{\partial t}$$

Cette relation dépend de la coordonnée horizontale x et du temps t. L'accélération de l'élément fluide peut alors se définir par la relation qui suit :

[Math. 3]

$$\frac{d^2v}{dt^2} = \frac{\partial^2 v}{\partial x^2} U^2 + 2\frac{\partial^2 v}{\partial x \partial t} U + \frac{\partial^2 v}{\partial t^2} + \frac{\partial U}{\partial t}\frac{\partial v}{\partial x}$$

Ces quatre termes correspondent respectivement à :

- l'accélération centripète :

[Math. 4]

$$\frac{\partial^2 v}{\partial x^2} U^2$$

- l'accélération de Coriolis :

[Math. 5]

$$2\frac{\partial^2 v}{\partial x \partial t} U$$

- l'accélération relative :

[Math. 6]

$$\frac{\partial^2 v}{\partial t^2}$$

- l'accélération liée aux variations de débit (on considérera que le débit est relativement constant par rapport à la fréquence des actionneurs 41 et 42, et que ce terme est donc sensiblement nul) :

[Math. 7]

$$\frac{\partial U}{\partial t} \frac{\partial v}{\partial x}.$$

Le terme de Coriolis est proportionnel à la vitesse du fluide. La force qui est associée à cette accélération (et que le fluide exerce sur la conduite 2) se définit :

[Math. 8]

$$F_c = 2 * \frac{\partial^2 v}{\partial x \partial t} * U * m_F$$

où mF est la masse du fluide. On retrouve ainsi la force définie par la relation suivante, proportionnelle au débit massique qm :

[Math. 9]

$$F_c = 2 \frac{\partial^2 v}{\partial x \partial t} q_m$$

Ainsi on peut déduire le débit massique dans la conduite en mesurant cette force, et en l'isolant des forces liées aux autres termes. Pour isoler cette force, il suffit que le déplacement soit caractérisé par une variation spatiale et temporelle avec un profil connu (appliquée au fluide par un mouvement coordonné de plusieurs actionneurs par exemple). Ce mouvement est localement par exemple :

[Math. 10]

$$v(x,t) = A * \cos(k * x) * \sin(w * t)$$

Le terme centripète est alors

[Math. 21]

$$A * U^2 * k^2 * \cos(k * x) * \sin(w * t) = U^2 * k^2 * v(x,t)$$

, celui de Coriolis en

[Math. 32]

$$-A * U * k * \sin(k * x) * \cos(w * t),$$

celui de l'accélération relative

[Math. 43]

$$A * w^2 * \cos(k * x) * \sin(w * t) = w^2 * v(x, t).$$

Ainsi le seul terme en quadrature temporellement avec le signal d'excitation est celui qui correspond à la force de Coriolis.

La mesure de l'amplitude de ce terme est possible par de nombreuses méthodes. Ces méthodes peuvent être basées sur un même principe de séparation de la composante en quadrature de celle en phase avec le signal d'excitation. Par exemple :

- Une mesure du signal de force avec un amplificateur à détection synchrone réglé de manière à fournir des mesures en quadrature avec le signal d'excitation (c'est-à-dire avec un décalage de phase de 90° avec celui-ci). Le réglage de la phase peut être réalisé au repos (U=0) où la phase des forces et celles des excitations présente un décalage nul.

- Une mesure du déphasage entre les signaux en amont/aval autour du point central x=0 où le profil spatial présente une symétrie paire, et ce pour une fréquence légèrement supérieure ou inférieure à la fréquence propre

[Math. 54]

$$\sqrt{k/m}\,.$$

- Avantageusement par un traitement du signal portant sur tous les enregistrement des forces

[Math. 65]

$$F(x_i, t_i)$$

(où $x_i$ sont les positions de mesures de forces et $t_i$ les instants de mesures) et les consignes de positions

[Math. 76]

$$v(x, t)$$

(ou éventuellement de relectures des positions effectives atteintes par les actionneurs) pour remonter par un modèle d'éléments finis basé sur les équations données ci-dessus au débit massique

[Math. 87]

$$q_m = v * m_F$$

On réalisera une calibration de la constante de proportionnalité entre la sortie du capteur et le débit massique. Cette constante de proportionnalité est nettement plus stable dans le temps que dans le cas de débitmètres massiques de Coriolis de l'état de la technique. Cette précision est notamment obtenue en l'absence de matériaux présentant de la plasticité : la plasticité de membranes d'actionneurs et capteurs pourrait induire une dérive des mesures. Avec des matériaux fragiles tels que le silicium, la silice, le nitrure de silicium, le nitrure de gallium pour ces composants (présentant une plasticité inférieure à celle des métaux), on limite les risques de dérive des mesures.

La figure 4 est une vue en coupe d'un exemple d'un autre mode de réalisation d'un dispositif de mesure de débit massique 1 selon l'invention. Le dispositif 1 inclut une conduite d'écoulement 2, similaire à celle décrite en référence à la figure 1. La conduite 2 définit la trajectoire d'écoulement de fluide illustrée par la ligne en tiret-point. La figure 4 illustre la conduite 2 en coupe selon un plan incluant cette trajectoire d'écoulement de fluide.

Le dispositif 1 comprend le groupe incluant les actionneurs 41 et 42 et le groupe incluant les capteurs 51 et 52, tels que décrits en référence à la figure 1. En outre, le dispositif 1 comprend d'autres groupes d'actionneurs 43, 44 et 45, 46. Les différents groupes d'actionneurs sont décalés les uns des autres le long de la trajectoire d'écoulement.

En outre, le dispositif 1 comprend d'autres groupes de capteurs 53, 54, et 55, 56, et 57, 58. Les différents groupes de capteurs sont décalés les uns des autres le long de la trajectoire d'écoulement.

Pour chaque groupe d'actionneurs, ceux-ci sont disposés dans un même plan transversal, incluant une section transversale de la conduite 2. Les actionneurs de chaque groupe sont ici disposés à l'opposée l'un de l'autre par rapport à la trajectoire d'écoulement de fluide. Les actionneurs d'un groupe peuvent être décalés angulairement par rapport aux actionneurs d'un autre groupe.

Un circuit de commande 3 est configuré pour commander le déplacement des actionneurs de chaque groupe, de sorte que l'aire de la section d'écoulement à travers la conduite 2 dans le plan incluant les actionneurs de ce groupe reste constante. Les différents actionneurs peuvent être déplacés avec les fréquences décrites en référence au mode de réalisation de la figure 1.

Les actionneurs des différents groupes peuvent être commandés pour se déplacer avec des amplitudes distinctes. Ainsi, on peut par exemple définir qu'un groupe d'actionneurs est positionné à une distance X le long de la trajectoire d'écoulement par rapport au point médian entre tous les actionneurs, et une distance L entre les actionneurs les plus distants. On peut prévoir que l'amplitude de déplacement des actionneurs à la distance X est proportionnel à une même constante multipliée par cos (a*X/L), avec a une constante.

Le dispositif de calcul 7 est configuré pour calculer le débit massique, par une mesure différentielle entre les mesures des capteurs d'un même groupe, selon un procédé similaire à celui décrit précédemment.

On peut également envisager de coupler les mesures effectuées par un tel dispositif de mesure 1 avec des mesures effectuées avec d'autres types de sondes de débits, telles que :

- les mesures de contrainte pariétales ;

- les débitmètres à ultrasons ;

Les débitmètres à ondes de surface ;

- les calculateurs à mesure Doppler optique.

## Revendications

**1.** Dispositif de mesure de débit massique (1), incluant:

- une conduite d'écoulement (2) définissant une trajectoire d'écoulement de fluide;

**caractérisé en ce qu'**il comprend en outre:

- un premier groupe d'actionneurs (41, 42), incluant au moins deux actionneurs disposés dans un premier plan incluant une première section transversale (20) de la conduite (2) et perpendiculaire à la trajectoire d'écoulement de fluide, les actionneurs (41, 42) du premier groupe étant configurés pour se déplacer sélectivement dans le premier plan, lesdits actionneurs du premier groupe étant configurés pour former sélectivement un retrait ou une saillie par rapport à la conduite, ce retrait et cette saillie présentant une aire Aa dans le premier plan, l'aire d'écoulement dans la conduite au niveau du premier plan étant désignée par Ac, la relation suivante étant respectée :

$$Ac/Aa > 10 \ ;$$

- un circuit de commande (3) configuré pour commander un déplacement des premier actionneurs (41, 42) du premier groupe de sorte que l'aire de la section d'écoulement à travers la conduite dans le premier plan reste constante, lesdits actionneurs du premier groupe étant commandés avec des consignes d'accélération ou des consignes de quantité de déplacement dans le premier plan ;
- au moins un capteur de mesure (51, 52) d'un effort ou d'une contrainte selon une direction perpendiculaire à la trajectoire d'écoulement, disposé à proximité des actionneurs du premier groupe (41, 42) selon la trajectoire d'écoulement, ledit capteur de mesure étant configuré pour mesurer un effort selon ladite direction perpendiculaire à la trajectoire d'écoulement ;
- un dispositif de calcul (7) configuré pour calculer le débit massique traversant la conduite d'écoulement en fonction de l'effort ou de la contrainte mesurée par ledit capteur.

2. Dispositif de mesure de débit massique (1) selon la revendication 1, dans lequel ledit débit massique est calculé à partir de la relation suivante,

$$F_c = 2\,\frac{\partial^2 v}{\partial x \partial t}\, q_m$$

avec Fc un effort mesuré par le capteur, qm le débit massique de fluide traversant la conduite d'écoulement, v une amplitude de déplacement transversal du fluide dans la conduite, x la position longitudinale du fluide dans la conduite, t le temps.

3. Dispositif de mesure de débit massique (1) selon l'une quelconque des revendications précédentes, dans lequel le premier groupe d'actionneurs (41, 42) inclut au moins deux actionneurs (41, 42) positionnés en des positions opposées de la première section transversale.

4. Dispositif de mesure de débit massique (1) selon l'une quelconque des revendications précédentes, dans lequel l'aire de la section d'écoulement dans le premier plan est au moins égale à 5mm$^2$.

5. Dispositif de mesure de débit massique (1) selon l'une quelconque des revendications précédentes, dans lequel lesdits actionneurs du premier groupe sont configurés pour modifier la forme de la section transversale de la conduite (2) dans le premier plan.

6. Dispositif de mesure de débit massique (1) selon l'une quelconque des revendications précédentes, dans lequel ledit capteur est un premier capteur (51), le dispositif comprenant en outre un deuxième capteur (52) disposé du côté opposé au premier capteur (51) par rapport à la trajectoire d'écoulement.

7. Dispositif de mesure de débit massique (1) selon la revendication 6, dans lequel lesdits premier et deuxième capteurs (52) sont disposés dans un même plan perpendiculaire à la trajectoire d'écoulement dans la conduite.

8. Dispositif de mesure de débit massique selon la revendication 7, dans lequel le dispositif de calcul (7) est configuré pour calculer le débit massique en fonction d'une différence entre les mesures des premier et deuxième capteurs.

9. Dispositif de mesure de débit massique (1) selon l'une quelconque des revendications 3 à 8, dans lequel la distance entre lesdits deux actionneurs (41, 42) est supérieure à la distance entre le premier actionneur et le premier capteur (51).

10. Dispositif de mesure de débit massique (1) selon l'une quelconque des revendications précédentes, dans lequel un des actionneurs (41, 42) du premier groupe comprend une membrane susceptible de se déplacer en retrait ou en saillie par rapport à la conduite dans le premier plan.

11. Dispositif de mesure de débit massique (1) selon l'une quelconque des revendications précédentes, comprenant en outre :

   - un deuxième groupe d'actionneurs incluant au moins deux actionneurs disposés dans un deuxième plan incluant une deuxième section transversale de la conduite et perpendiculaire à la trajectoire d'écoulement de fluide, le deuxième plan étant distant du premier selon ladite trajectoire d'écoulement, chacun des actionneurs du deuxième groupe étant configuré pour se déplacer sélectivement dans le deuxième plan ;
   - le circuit de commande étant configuré pour commander un déplacement des actionneurs du deuxième groupe de sorte que l'aire de la section d'écoulement à travers la conduite dans le deuxième plan reste constante.

12. Dispositif de mesure de débit massique(1) selon l'une quelconque des revendications précédentes, dans lequel ledit circuit de commande (3) est configuré pour un déplacement des actionneurs du premier groupe à une fréquence au moins égale à 20KHz.

13. Dispositif de mesure de débit massique(1) selon revendication 12, dans lequel ledit circuit de commande (3) est configuré pour un déplacement des actionneurs du premier groupe à différentes fréquences aux moins égales à 20KHz.

**14.** Dispositif de mesure de débit massique (1) selon l'une quelconque des revendications précédentes, dans lequel le dispositif de calcul (7) est configuré pour filtrer les mesures du capteur pour conserver des termes en quadrature avec l'excitation de l'un au moins des actionneurs du premier groupe.

**15.** Dispositif de mesure de débit massique (1) selon les revendications 6 et 14, dans lequel ledit dispositif de calcul (7) est configuré pour filtrer les mesures des premier et deuxième capteurs pour conserver des termes en quadrature avec l'excitation des actionneurs du premier groupe, et configuré pour soustraire ces termes en quadrature afin de calculer le débit massique.

**16.** Dispositif de mesure de débit massique (1) selon l'une quelconque des revendications précédentes, dans lequel la conduite d'écoulement (2) présente un sens d'écoulement en fonctionnement normal, et dans lequel ledit capteur est disposé en aval selon ce sens d'écoulement, par rapport aux actionneurs du premier groupe d'actionneurs.

**17.** Procédé de mesure de débit massique, dans un dispositif selon l'une des revendications précédentes, le procédé de mesure comprenant :

- la commande d'un déplacement des premier et deuxième actionneurs (41, 42) du premier groupe de sorte que l'aire de la section d'écoulement à travers la conduite dans le premier plan reste constante, lesdits actionneurs du premier groupe étant commandés avec des consignes d'accélération ou des consignes de quantité de déplacement dans le premier plan ;
- le calcul du débit massique traversant la conduite d'écoulement en fonction de l'effort ou de la contrainte mesurée par ledit capteur.

**Patentansprüche**

**1.** Massendurchflussmessvorrichtung (1), beinhaltend:

- eine Strömungsleitung (2), die eine Fluidströmungsbahn definiert,

**dadurch gekennzeichnet, dass** sie ferner umfasst:

- eine erste Gruppe von Aktoren (41, 42), die mindestens zwei Aktoren beinhaltet, die in einer ersten Ebene angeordnet sind, die einen ersten Querschnitt (20) der Leitung (2) beinhaltet und senkrecht zur Fluidströmungsbahn verläuft, wobei die Aktoren (41, 42) der ersten Gruppe dazu ausgestaltet sind, sich selektiv in der ersten Ebene zu verlagern, wobei die Aktoren der ersten Gruppe dazu ausgestaltet ist, selektiv einen Rücksprung oder einen Vorsprung in Bezug auf die Leitung zu bilden, wobei dieser Rücksprung und dieser Vorsprung einen Flächeninhalt Aa in der ersten Ebene aufweisen, wobei der Strömungsflächeninhalt in der Leitung auf Höhe der ersten Ebene mit Ac bezeichnet wird, wobei die folgende Gleichung erfüllt ist:

$$Ac/Aa > 10;$$

- eine Steuerschaltung (3), die dazu ausgestaltet ist, eine Verlagerung der ersten Aktoren (41, 42) der ersten Gruppe zu steuern, so dass der Flächeninhalt des Strömungsquerschnitts durch die Leitung hindurch in der ersten Ebene konstant bleibt, wobei die Aktoren der ersten Gruppe mit Beschleunigungssollwerten oder Verlagerungsmengensollwerten in der ersten Ebene gesteuert werden;
- mindestens einen Messsensor (51, 52) zum Messen einer Kraft oder einer Belastung entlang einer Richtung senkrecht zur Strömungsbahn, der in der Nähe der Aktoren der ersten Gruppe (41, 42) entlang der Strömungsbahn angeordnet ist, wobei der Messsensor dazu ausgestaltet ist, eine Kraft entlang der Richtung senkrecht zur Strömungsbahn zu messen;
- eine Rechenvorrichtung (7), die dazu ausgestaltet ist, den Massendurchfluss, der die Strömungsleitung durchquert, in Abhängigkeit von der von dem Fühler gemessenen Kraft oder Belastung zu berechnen.

**2.** Massendurchflussmessvorrichtung (1) nach Anspruch 1, bei welcher der Massendurchfluss anhand der folgenden Gleichung berechnet wird,

$$F_c = 2 \frac{\partial^2 v}{\partial x \partial t} q_m$$

wobei Fc eine vom Sensor gemessene Kraft ist, qm der die Strömungsleitung durchquerende Fluidmassendurchfluss ist, v eine Querverlagerungsamplitude des Fluids in der Leitung ist, x die Längsposition des Fluids in der Leitung ist, t die Zeit ist.

3. Massendurchflussmessvorrichtung (1) nach einem der vorhergehenden Ansprüche, bei der die erste Gruppe von Aktoren (41, 42) mindestens zwei Aktoren (41, 42) beinhaltet, die an entgegengesetzten Positionen des ersten Querschnitts positioniert sind.

4. Massendurchflussmessvorrichtung (1) nach einem der vorhergehenden Ansprüche, bei welcher der Flächeninhalt des Strömungsquerschnitts in der ersten Ebene mindestens 5 mm$^2$ beträgt.

5. Massendurchflussmessvorrichtung (1) nach einem der vorhergehenden Ansprüche, bei der die Aktoren der ersten Gruppe dazu ausgestaltet sind, die Form des Querschnitts der Leitung (2) in der ersten Ebene zu verändern.

6. Massendurchflussmessvorrichtung (1) nach einem der vorhergehenden Ansprüche, bei welcher der Sensor ein erster Sensor (51) ist, wobei die Vorrichtung ferner einen zweiten Sensor (52) umfasst, der in Bezug auf die Strömungsbahn auf der zum ersten Sensor (51) entgegengesetzten Seite angeordnet ist.

7. Massendurchflussmessvorrichtung (1) nach Anspruch 6, bei welcher der erste und der zweite Sensor (52) in derselben Ebene senkrecht zur Strömungsbahn in der Leitung angeordnet sind.

8. Massendurchflussmessvorrichtung nach Anspruch 7, bei der die Rechenvorrichtung (7) dazu ausgestaltet ist, den Massendurchfluss in Abhängigkeit von einer Differenz zwischen den Messungen der ersten und zweiten Sensoren zu berechnen.

9. Massendurchflussmessvorrichtung (1) nach einem der Ansprüche 3 bis 8, bei welcher der Abstand zwischen den beiden Aktoren (41, 42) größer ist als der Abstand zwischen dem ersten Aktor und dem ersten Sensor (51).

10. Massendurchflussmessvorrichtung (1) nach einem der vorhergehenden Ansprüche, bei der einer der Aktoren (41, 42) der ersten Gruppe eine Membran umfasst, die geeignet ist, sich in Bezug auf die Leitung in der ersten Ebene rückspringend oder vorspringend zu verlagern.

11. Massendurchflussmessvorrichtung (1) nach einem der vorhergehenden Ansprüche, umfassend ferner:

   - eine zweite Gruppe von Aktoren, die mindestens zwei Aktoren beinhaltet, die in einer zweiten Ebene angeordnet sind, die einen zweiten Querschnitt der Leitung beinhaltet und senkrecht zur Fluidströmungsbahn ist, wobei die zweite Ebene von der ersten entlang der Strömungsbahn beabstandet ist, wobei jeder der Aktoren der zweiten Gruppe dazu ausgestaltet ist, sich selektiv in der zweiten Ebene zu verlagern;
   - wobei die Steuerschaltung dazu ausgestaltet ist, eine Verlagerung der Aktoren der zweiten Gruppe zu steuern, so dass der Flächeninhalt des Strömungsquerschnitts durch die Leitung hindurch in der zweiten Ebene konstant bleibt.

12. Massendurchflussmessvorrichtung (1) nach einem der vorhergehenden Ansprüche, bei der die Steuerschaltung (3) für eine Verlagerung der Aktoren der ersten Gruppe mit einer Frequenz von mindestens 20 kHz ausgestaltet ist.

13. Massendurchflussmessvorrichtung (1) nach Anspruch 12, bei der die Steuerschaltung (3) für eine Verlagerung der Aktoren der ersten Gruppe mit verschiedenen Frequenzen von mindestens 20 kHz ausgestaltet ist.

14. Massendurchflussmessvorrichtung (1) nach einem der vorhergehenden Ansprüche, bei der die Rechenvorrichtung (7) dazu ausgestaltet ist, die Messungen des Sensors zu filtern, um Terme zu behalten, die mit der Erregung mindestens eines der Aktoren der ersten Gruppe um 90° phasenverschoben sind.

15. Massendurchflussmessvorrichtung (1) nach den Ansprüchen 6 und 14, bei der die Rechenvorrichtung (7) dazu ausgestaltet ist, die Messungen der ersten und zweiten Sensoren zu filtern, um Terme zu behalten, die mit der Erregung der Aktoren der ersten Gruppe um 90° phasenverschoben sind, und dazu ausgestaltet ist, diese um 90° phasenverschobenen Terme zu subtrahieren, um den Massendurchfluss zu berechnen.

16. Massendurchflussmessvorrichtung (1) nach einem der vorhergehenden Ansprüche, bei der die Strömungsleitung (2) eine Strömungsrichtung im Normalbetrieb aufweist und bei welcher der Sensor stromab entlang dieser Strömungsrichtung in Bezug auf die Aktoren der ersten Gruppe von Aktoren angeordnet ist.

17. Massendurchflussmessverfahren in einer Vorrichtung nach einem der vorhergehenden Ansprüche, wobei das Messverfahren umfasst:

   - das Steuern einer Verlagerung der ersten und zweiten Aktoren (41, 42) der ersten Gruppe, so dass der Flächeninhalt des Strömungsquerschnitts durch die Leitung hindurch in der ersten Ebene konstant bleibt, wobei die Aktoren der ersten Gruppe mit Beschleunigungssollwerten oder Verlagerungsmengensollwerten in der ersten Ebene gesteuert werden;
   - das Berechnen des Massendurchflusses, der die Strömungsleitung durchquert, in Abhängigkeit von der von dem Sensor gemessenen Kraft oder Belastung.


**Claims**

1. Device (1) for measuring mass flow rate, including:

   - a flow tube (2) defining a fluid-flow path;

   **characterized in that** it furthermore comprises:

   - a first group of actuators (41, 42), including at least two actuators placed in a first plane including a first cross section (20) of the tube (2) and perpendicular to the fluid-flow path, the actuators (41, 42) of the first group being configured to move selectively in the first plane, said actuators of the first group being configured to selectively form a recess or protrusion with respect to the tube, this recess and this protrusion having an area Aa in the first plane, the flow area in the tube level with the first plane being denoted by Ac, the following relationship being respected:

$$Ac/Aa > 10;$$

   - a control circuit (3) configured to control a movement of the first and second actuators (41, 42) of the first group so that the area of the cross section of the flow through the tube in the first plane remains constant, said actuators of the first group being controlled with acceleration setpoints or with setpoints for an amount of movement in the first plane;
   - at least one sensor (51, 52) for measuring a force or a stress in a direction perpendicular to the flow path, said measuring sensor being placed in proximity to the actuators of the first group (41, 42) on the flow path and furthermore being configured to measure a force in said direction perpendicular to the flow path;
   - a computing device (7) configured to compute the mass flow rate passing through the flow tube depending on the force or the stress measured by said sensor.

2. Device (1) for measuring mass flow rate according to Claim 1, wherein said mass flow rate is computed using the following relationship,

$$F_c = 2\frac{\partial^2 v}{\partial x \partial t} q_m$$

   with Fc a force measured by the sensor, qm the mass flow rate of fluid passing through the flow tube, v an amplitude of transverse movement of the fluid in the tube, x the longitudinal position of the fluid in the tube, and t time.

3. Device (1) for measuring mass flow rate according to any one of the preceding claims, wherein the first group of actuators (41, 42) includes at least two actuators (41, 42) positioned in opposite positions on the first cross section.

4. Device (1) for measuring mass flow rate according to any one of the preceding claims, wherein the area of the cross section of the flow in the first plane is at least equal to 5 mm$^2$.

5. Device (1) for measuring mass flow rate according to any one of the preceding claims, wherein said actuators of the first group are configured to modify the shape of the cross section of the tube (2) in the first plane.

6. Device (1) for measuring mass flow rate according to any one of the preceding claims, wherein said sensor is a first sensor (51), the device furthermore comprising a second sensor (52) placed on the side opposite the first sensor (51) with respect to the flow path.

7. Device (1) for measuring mass flow rate according to Claim 6, wherein said first and second sensors (52) are placed in the same plane perpendicular to the flow path of the flow through the tube.

8. The device for measuring mass flow rate according to Claim 7, wherein the computing device (7) is configured to compute the mass flow rate depending on a difference between the measurements of the first and second sensors.

9. Device (1) for measuring mass flow rate according to any one of Claims 3 to 8, wherein the distance between said two actuators (41, 42) is larger than the distance between the first actuator and the first sensor (51).

10. Device (1) for measuring mass flow rate according to any one of the preceding claims, wherein one of the actuators (41, 42) of the first group comprises a membrane capable of moving so as to become recessed or to protrude with respect to the tube in the first plane.

11. Device (1) for measuring mass flow rate according to any one of the preceding claims, furthermore comprising:

   - a second group of actuators including at least two actuators placed in a second plane including a second cross section of the tube and perpendicular to the fluid-flow path, the second plane being distant from the first along said flow path, each of the actuators of the second group being configured to move selectively in the second plane;
   - the control circuit being configured to control a movement of the actuators of the second group so that the area of the cross section of the flow through the tube in the second plane remains constant.

12. Device (1) for measuring mass flow rate according to any one of the preceding claims, wherein said control circuit (3) is configured for a movement of the actuators of the first group at a frequency at least equal to 20 KHz.

13. Device (1) for measuring mass flow rate according to Claim 12, wherein said control circuit (3) is configured for a movement of the actuators of the first group at various frequencies at least equal to 20 KHz.

14. Device (1) for measuring mass flow rate according to any one of the preceding claims, wherein the computing device (7) is configured to filter the measurements of the sensor to preserve terms in quadrature with the excitation of one at least of the actuators of the first group.

15. Device (1) for measuring mass flow rate according to Claims 6 and 14, wherein said computing device (7) is configured to filter the measurements of the first and second sensors to preserve terms in quadrature with the excitation of the actuators of the first group, and configured to subtract these quadrature terms in order to compute the mass flow rate.

16. Device (1) for measuring mass flow rate according to any one of the preceding claims, wherein the flow tube (2) has a flow direction in normal operation, and wherein said sensor is placed downstream, in this flow direction, with respect to the actuators of the first group of actuators.

17. Method for measuring mass flow rate, in a device according to one of the preceding claims, the measuring method comprising:

   - controlling a movement of the first and second actuators (41, 42) of the first group so that the area of the cross section of the flow through the tube in the first plane remains constant, said actuators of the first group being controlled with acceleration setpoints or with setpoints for an amount of movement in the first plane;
   - computing the mass flow rate passing through the flow tube depending on the force or the stress measured by said sensor.

[Fig. 1]

[Fig. 2]

EP 3 850 315 B1

[Fig. 3]

[Fig. 4]

15

**EP 3 850 315 B1**

## RÉFÉRENCES CITÉES DANS LA DESCRIPTION

**Documents brevets cités dans la description**

- EP 2888562 A

- WO 2004011894 A